Europäisches Patentamt

European Patent Office

Office européen des brevets

(11) Veröffentlichungsnummer: **0 014 743**
**B1**

(12) **EUROPÄISCHE PATENTSCHRIFT**

(45) Veröffentlichungstag der Patentschrift: **15.12.82**

(51) Int. Cl.³: **F 16 M 7/00, F 16 M 3/00**

(21) Anmeldenummer: **79104596.6**

(22) Anmeldetag: **19.11.79**

(54) Grundträger für einen Kompressor mit Antriebsmotor.

(30) Priorität: **22.02.79 DE 2906991**

(43) Veröffentlichungstag der Anmeldung:
**03.09.80 Patentblatt 80/18**

(45) Bekanntmachung des Hinweises auf die Patenterteilung:
**15.12.82 Patentblatt 82/50**

(84) Benannte Vertragsstaaten:
**BE CH DE FR GB IT NL SE**

(56) Entgegenhaltungen:
FR - A - 1 191 489
US - A - 2 958 489
US - A - 3 066 898
US - A - 3 652 044

(73) Patentinhaber: **Aerzener Maschinenfabrik GmbH**
**Reherweg 28**
**D-3251 Aerzen 1 (DE)**

(72) Erfinder: **Bothe, Hans-Joachim, Ing.**
**Am Wasserturm 2**
**D-4924 Barntrup 1 (DE)**
Erfinder: **Kockel, Heinz-Jürgen, Dipl.-Ing.**
**Lerchenweg 12**
**D-3251 Aerzen 1 (DE)**
Erfinder: **Nissen, Hans, Dipl.-Ing.**
**Tulpenweg 3**
**D-3251 Aerzen 1 (DE)**
Erfinder: **Schelp, Helmut**
**Reinerbecker Strasse 27**
**D-3251 Aerzen 1 (DE)**
Erfinder: **Wildenhof, Peter, Dipl.-Ing.**
**Hainebuchenweg 14**
**D-3251 Aerzen 1 (DE)**

(74) Vertreter: **Eitle, Werner, Dipl.Ing. et al,**
**Arabellastrasse 4 Sternhaus**
**D-8000 München 81 (DE)**

# Grundträger für einen Kompressor mit Antriebsmotor

Die vorliegende Erfindung betrifft einen Grundträger für einen Kompressor mit Antriebsmotor, bestehend aus einem langgestreckten rohrartigen Grundkörper, an dessen Außenseite Befestigungseinrichtungen für den Antriebsmotor und in dessen Innenraum Schalldämpfeinrichtungen angeordnet sind, die einen oder mehrere von einem Absorptionsmaterialmantel umhüllten perforierten Kanal sowie eine oder mehrere Resonatorkammern umfassen, wobei sich der Kanal im wesentlichen in der Längsrichtung des Grundkörpers erstreckt und mit seinem Eingang mit der Druckseite des Kompressors und mit seinem Ausgang mit einem Druckrohranschluß in Verbindung steht, und der Grundkörper über mindestens zwei Fußanordnungen abgestützt ist.

Grundträger dieser Art erfüllen zwei Funktionen. Zum einen dienen sie als Maschinengestell für den Kompressor und den Antriebsmotor, zum anderen bilden sie das Gehäuse für die Schalldämpfeinrichtungen, so daß gegenüber herkömmlichen Konstruktionen gesonderte Schalldämpfergehäuse nicht mehr notwendig sind und die Bauhöhe erheblich reduziert werden kann.

Grundträger der bekannten Art haben allerdings, den Nachteil, daß sie sich stets nur für eine bestimmte Kompressor- und Antriebsmotorengröße eignen und eine Umstellung auf andere Kompressor- und Antriebsmotorengrößen — sofern überhaupt — nur mit aufwendigen Bearbeitungsvorgängen möglich ist.

Ziel der vorliegenden Erfindung ist es, einen Grundträger der gattungsgemäßen Art unter Beibehaltung seiner grundsätzlichen Vorteile derart weiterzubilden, daß er für alle innerhalb eines gewählten Fördermengenbereiches möglichen Kombinationen und Größen von Kompressoren und Antriebsmotoren ohne spanlose, spanabhebende oder schweißtechnische Bearbeitungsvorgänge ohne weiteres anpaß- und einsetzbar ist.

Dieses Ziel wird erfindungsgemäß dadurch erreicht, daß mindestens eine Fußanordnung, die Befestigungseinrichtung für den Antriebsmotor und mindestens Teile der Schalldämpfeinrichtungen mittels einer Spanneinrichtung an bzw. in dem Grundkörper innerhalb eines bestimmten Bereiches verschiebbar und an jeder Stelle festlegbar sind.

Durch die erfindungsgemäßen Merkmale ist erstmalig ein Grundträger geschaffen, der aus relativ wenigen und einfachen Teilen, in der Hauptsache handelsüblichem Halbzeug, besteht, das relativ wenig bearbeitet werden muß. Die wenigen notwendigen Bearbeitungsvorgänge sind dabei einfach und kostengünstig vorzunehmen.

Der Hauptvorteil besteht jedoch darin, daß ein Grundträger der erfindungsgemäßen Art praktisch allen denkbaren Einsatzfällen innerhalb des vorgegebenen Fördermengenbereiches durch einfache Umstell- und Anpaßarbeiten, d.h. praktisch ohne spanlose, spanabhebende oder schweißtechnische Bearbeitungsvorgänge, angepaßt werden kann. Diese Anpassung ist erfindungsgemäß ohne weiteres möglich sowohl in bezug auf den Einsatz verschiedener Kompressor- und/oder Antriebsmotorgrößen im Direkt- oder Fremdantrieb, als auch hinsichtlich der Abstimmung der Schalldämpfeinrichtungen auf die jeweiligen Erfordernisse, sowie hinsichtlich der Lage der zur Abstützung de Grundkörpers notwendigen Fußanordnungen bzw. Füße. Diese universelle Anpaßbarkeit ermöglicht ferner eine nachträgliche Umstellung des Grundkörpers im Falle veränderter Einsatzbedingungen direkt am Einsatzort.

Eine vorteilhafte Möglichkeit der variablen Anpassung ist dadurch gegeben, daß die Fußanordnung mittels der Spanneinrichtung am Grundkörper festklemmbar ist. Dabei kann es zweckmäßig sein, die Spanneinrichtung für jede Fußanordnung derart auszubilden, daß sie den Grundkörper über seinen gesamten Umfang klammerartig umfaßt. Bei einer derartigen Ausgestaltung kann die Fußanordnung bzw. können die Füße stets unter den Schwerpunkten von Kompressor und Antriebsmotor am Grundkörper festgelegt werden. Dies erbringt Vorteile sowohl in statischer als auch in schwingungsdynamischer Hinsicht. Durch das Festklemmen bzw. das Klammerartige Umfassen wird der Grundkörper, der aufgrund seiner Funktion als Gehäuse für die Schalldämpfeinrichtungen gasdicht sein muß, weder durch Anschweißungen noch durch Bohrungen verletzt.

Da die Fußanordnung erst bei der Montage festgeklemmt bzw. festgeklammert wird, stellt der Grundkörper ein langgestrecktes Teil ohne vorstehende oder herausragende Elemente dar, so daß mangels Sperrigkeit eine einfache Lagerung und ein problemloser Transport möglich ist.

Eine vorteilhafte Möglichkeit der variablen Anpassung ist darüberhinaus dadurch gegeben, daß die Befestigungseinrichtung für den Antriebsmotor mittels der Spanneinrichtung ebenfalls am Grundkörper festklemmbar ist. Zweckmäßig kann es dabei sein, wenn die Spanneinrichtung für die Befestigungseinrichtung für den Antriebsmotor den Grundkörper über seinen gesamten Umfang klammerartig umfaßt. Diese Anordnung ersetzt in vorteilhafter Weise die bei herkömmlichen Grundträgern verwendeten schweren und relativ hochbauenden Spannschienen, wodurch die Konstruktion technisch einfacher und in bezug auf die Abmessungen niedriger wird. Aufgrund der Klemmverbindung wird auch im Falle der Befestigungseinrichtung für den Antriebsmotor der als Druckbehälter ausgebildete Grundkörper weder durch Anschweißungen noch durch Bohrungen verletzt. Auch ermöglicht diese Ausgestaltung eine einfache Justierung der Fluchtung sowohl beim Direkt- als auch beim Fremdantrieb. Im Falle des Fremdantriebes ist darüberhinaus durch diese Ausgestaltung die Riemenspannung auf einfache Weise einstellbar.

Vorteilhaft ist es ferner, daß die Teile der Schalldämpfeinrichtung mittles der Spanneinrichtung am Grundkörper feststellbar sind. Dadurch wird eine Versteifung des Grundkörpers durch die Schalldämpfeinrichtung vermieden und eine schwingungsdynamisch günstige Ausgestaltung erzielt, bei der eine Verletzung der Grundkörperwandung durch Schweißnähte oder Bohrungen ebenfalls vermieden wird.

Zweckmäßig ist es ferner, daß die Teile der Schalldämpfeinrichtung eine oder mehrere geschlossene oder mit Durchbrüchen versehene verschiebbare Quer- und/oder Längswände umfassen. Dadurch wird die Möglichkeit geschaffen, den Grundträger der jeweils verwendeten Kompressor-Antriebsmotor-Kombination und dem jeweiligen Verwendungszweck entsprechend optimal akustisch anzupassen.

Zweckmäßigerweise besteht jede Fußanordnung aus zwei gleichen Wangen, die jeweils auf gegenüberliegenden Seiten des Grundkörpers angeordnet und über Spannschellen, Spannschrauben oder Spannbügel am Grundkörper festklemmbar sind. Durch eine derartige Ausgestaltung wird die Teilevielfalt reduziert und ermöglicht, die Teile als Schüttware zur Verfügung zu stellen.

Darüberhinaus ergibt eine derartige Anordnung einen relativ einfachen und sehr stabilen Aufbau.

Vorteilhaft ist es, zwischen den Wangen und dem Grundkörper eine Zwischenlage anzuordnen. Diese Zwischenlage kann zur Schwingungsdämpfung aus einem elastischen Material bestehen und/oder zur Erhöhung des Reibwertes eine rauhe oder Klebende Oberfläche aufweisen. Während durch eine schwingungsdämpfende Zwischenlage der Körperschall reduziert wird, erhöht eine Zwischenlage mit rauher oder klebender Oberfläche die Festigkeit der Verbindung.

Zur Körperschallreduzierung ist es ferner zweckmäßig, daß sich die Wangen über Schwingmetallfüße auf dem Fundament abstützen.

Eine besonders vorteilhafte, einfache und stabile Ausgestaltung bei einem Grundkörper mit rechteckigem Querschnitt wird dadurch erzielt, daß die Wangen im Querschnitt etwa T-förmig ausgebildet sind, wobei auf einer Hälfte des Querbalkens der Grundkörper mit seiner Bodenwand aufliegt, die andere Hälfte des Querbalkens auf ihrer Unterseite den Schwingmetallfuß trägt und der senkrecht nach oben verlaufende Steg des T-förmigen Querschnittes an der Seitenwand des Grundkörpers anliegt.

Eine einfache und stabile Konstruktion bei einer derartigen Anordnung ergibt sich dadurch, daß die Wangen mit mindestens zwei Spannschrauben miteinander verbunden sind, die oberhalb und unterhalb des Grundkörpers etwa parallel zur benachbarten Wand verlaufen und sich durch Bohrungen in den Wangen hindurch erstrecken.

Statisch vorteilhaft ist es bei einer derartigen Konstruktion, wenn unterhalb des Grundkörpers zwei und oberhalb des Grundkörpers eine Spannschraube angeordnet werden.

Eine technisch einfach aufgebaute und niedrig bauende variable Befestigungseinrichtung für den Antriebsmotor wird dadurch geschaffen, daß eine Konsole vorgesehen wird, die mit ihrem Steg auf der Oberseite des Grundkörpers aufruht und an diesem seitlich geführt ist. Zweckmäßig ist es dabei, wenn die Konsole U-förmig ausgebildet ist, der Steg der Konsole aus einem handelsüblichen Flachstahl besteht und als Schenkel Gesenkschmiedestücke verwendet werden, die an dem Flachstahl angeschweißt sind.

Eine einfache Querverschiebbarkeit für den Antriebsmotor wird vorteilhafterweise durch quer zur Längserstreckung des Grundkörpers verlaufende Führungsschienen erreicht, die auf dem Steg der Konsole angeordnet sind.

Eine technisch einfach aufgebaute und statisch günstige Lösung wird dadurch erreicht, daß die Konsole als Spanneinrichtung mindestens einen den Grundkörper unterfangenden Bügel aufweist.

Eine Anpassungmöglichkeit an praktisch alle denkbaren Motorfußpositionen ist auf einfache Weise dadurch gegeben, daß die Konsole aus zwei Teilen besteht, die über mindstens eine Gewindestange abstandsverstellbar miteinander verbunden sind.

Eine einfache Spannmöglichkeit für den Riementrieb im Falle der Verwendung eines Fremdantriebes und eine einfache Justiermöglichkeit zur Einstellung der Fluchtung wird dadurch erreicht, daß sich die Konsole über mindestens eine Gewindestange an dem Grundträger, an mit diesem verbundenen Teilen oder an der Fußanordnung abstandsverstellbar abstützt.

Zur Abstimmung der Motorachshöhe gegenüber der Kompressorachshöhe ist es zweckmäßig, daß die Konsole höhenverstellbare Anschlußstücke trägt.

Zur Schaffung eines sowohl in statischer als auch in schwingungsdynamischer Hinsicht günstigen Aufbaues ist es zweckmäßig, daß die Fußanordnung zwischen den beiden Teilen der Konsole angeordnet ist. In einem solchen Fall kann es zweckmäßig sein, die Fußanordnung und die Befestigungseinrichtung einstückig bzw. als Montageeinheit auszubilden.

Wie bereits ausgeführt, besitzt die Schalldämpfeinrichtung eine oder mehrere geschlossene oder mit Durchbrüchen versehene verschiebbare Quer- und/oder Längswände. Die Durchbrüche der Wände können dabei zur Bildung von Abzweigresonatoren mit einem oder mehreren Rohrstutzen versehen werden. Vorteilhafterweise erstrecken sich die Rohrstutzen in Längsrichtung des Grundkörpers. Zur Abstimmung auf bestimmte Frequenzen kann es zweckmäßig sein, die Stirnflächen der Rohrstutzen in einem rechten oder einem anderen Winkel zur Stutzenachse verlaufend anzuordnen und die Wände an einer oder mehreren, vorzugsweise in Längsrichtung des Grundkörpers verlaufenden Spindeln oder Stangen zu befestigen. Durch eine derartige Ausgestaltung können auf einfache Weise Abzweig-, Interferenz-, Reihen- und andere Resonatoren gebildet werden.

Vorteilhaft ist es, die Spindeln oder Stangen von außen betätigbar auszubilden. Dadurch wird es möglich, die Abstimmung auch während des Betriebes vorzunehmen.

Zur Vermeidung von Scheppergeräuschen und zur Erhöhung der Dichtigkeit ist es zweckmäßig, zwischen den Wänden und der Innenfläche des Grundkörpers Dichteinrichtungen, beispielsweise in Form von elastischen Profilschnüren, vorzusehen.

Bei einer bevorzugten Ausführungsform ist der Grundkörper auf der dem Druckrohranschluß gegenüberliegenden Seite über den Kompressor hinaus verlängert. In diesem verlängerten Bereich besitzt der Grundkörper mindestens eine Resonatorkammer, die hintereinander drei im Abstand zueinander angeordnete und gegeneinander verschiebbare Querwände besitzt, wobei die der Grundkörperstirnwandung benachbarte Querwand geschlossen ist und die übrigen beiden Querwände mit einem zentralen Durchbruch zur Aufnahme je eines Rohrstutzens ausgestattet sind und die einander zugewandten Stirnenden der Rohrstutzen etwa im Bereich der Einlaßoffnung des Grundkörpers liegen sowie die zur Verschiebung und Feststellung der Querwände vorgesehenen Spindeln oder Stangen mit ihren der Grundkörperstirnwandung entgegengesetzten Enden an dem Absorptionsschalldämpfer anschliessen. Dabei kann mindestens ein Rohrstutzen im Bereich seines unter der Einlaßöffnung des Grundkörpers liegenden Endes schräg abgeschnitten sein.

Eine derartige Ausgestaltung erbringt neben einer einheitlichen Ausführung eine gute Abstimmbarkeit für eine große Zahl von Anwendungsfällen. Auch ist es bei dieser Ausgestaltung möglich, die Gesamtheit der Schalldämpferteile zu einer Einheit zusammenzufassen, so daß sie nach Art einer Kartusche in den Grundkörper eingeschoben werden können. Eine derartige Ausgestaltung vereinfacht das Aus- und Einbauen der Schalldämpfeinrichtungen und ermöglicht eine leichte Reinigung sowie einen problemlosen Austausch.

Vorteilhaft ist ferner, daß der Kompressor über ein oder mehrere Höhenausgleichsstücke und/oder Nennweitenadapter an den Grundkörper angeschlossen ist. Eine derartige Ausgestaltung ermöglicht eine einfache Anpassung der Kompressorachshöhe an die jeweilige Motorachshöhe, so daß auf einfache Weise auch relativ große und langsamlaufende Kompressoren aufgebaut werden können.

Eine einfache Anpaßbarkeit und universelle Einsetzbarkeit für verschiedene Kompressor-Antriebsmotor-Kombinationen ist dadurch gegeben, daß der Riemenschutz im Bereich seiner Unterseite Anschlußteile aufweist, die jeweils von einer an der Fußanordnung befestigten Spindel oder Stange quer zur Grundkörperlängsachse verschiebbar und festlegbar sind. Die Anpaßbarkeit wird dadurch verbessert, daß die Anschlußteile an dem Riemenschutz in Grundkörperlängsrichtung ebenfalls verschiebbar befestigt sind.

Um einen Riemenschutz für eine Vielzahl von Kompressor-Antriebsmotor-Kombinationen verwenden zu können, ist es zweckmäßig, daß die dem Kompressor und dem Antriebsmotor zugewandte Wand des Riemenschutzes langgestreckte Aussparungen für die Riemenscheibenwellen aufweist.

Im folgenden ist zur weiteren Erläuterung und zum besseren Verständnis ein Ausführungsbeispiel der Erfindung unter Bezugnahme auf die beigefügten Zeichnungen näher beschrieben und erläutert.

Fig. 1 zeigt einen erfindungsgemäßen Grundträger in einer Seitenansicht, wobei zur Darstellung der Variabilität eine kleine Kompressor-Antriebsmotor-Kombination mit ausgezogenen Linien und eine große Kompressor-Antriebsmotor-Kombination mit strichpunktierten Linien angedeutet ist,

Fig. 2 zeigt eine Draufsicht auf den Grundträger gemäß Fig. 1, wobei der Übersichtlichkeit halber sowohl der Kompressor als auch der Antriebsmotor einschließlich Riemenatrieb nicht dargestellt sind,

Fig. 3 zeigt eine Schnittdarstellung des Grundträgers in der Ebene III—III der Fig. 1,

Fig. 4 zeigt einen Schnitt in der Ebene IV der Fig. 1,

Fig. 5 zeigt eine Ansicht des in Fig. 3 im Querschnitt dargestellten Riemenschutzes aus der Richtung des Pfeiles V der Fig. 3, und

Fig. 6 zeigt in vergrößertem Maßstab einen Vetikalschnitt durch die unter dem Kompressor angeordnete Hälfte des Grundkörpers zur Darstallung eines Teiles der im Grundkörperinnenraum angeordneten Schalldämpfeinrichtungen.

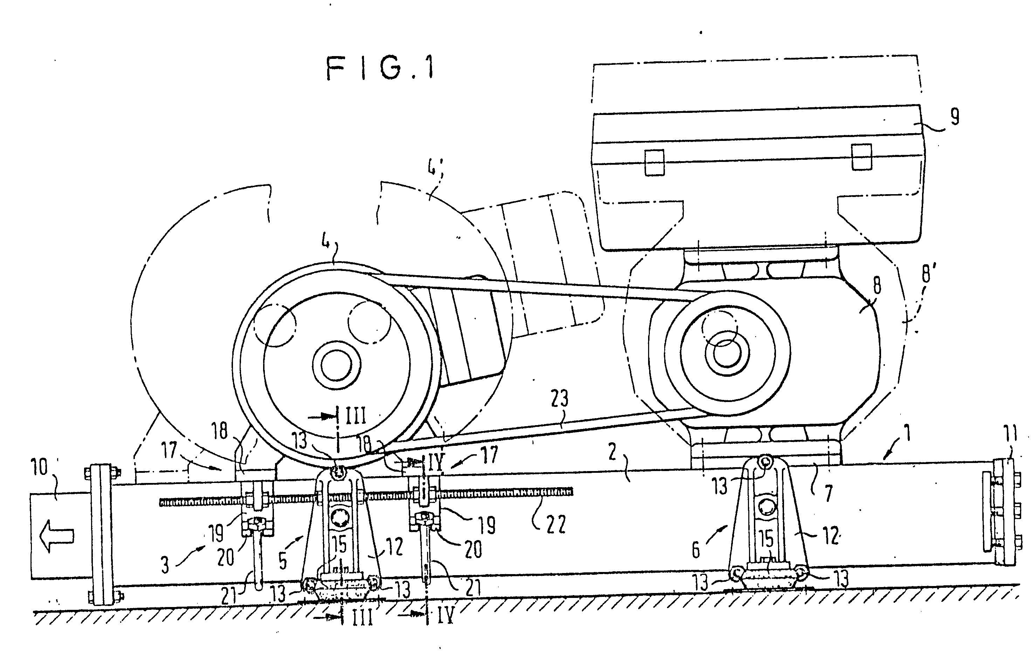

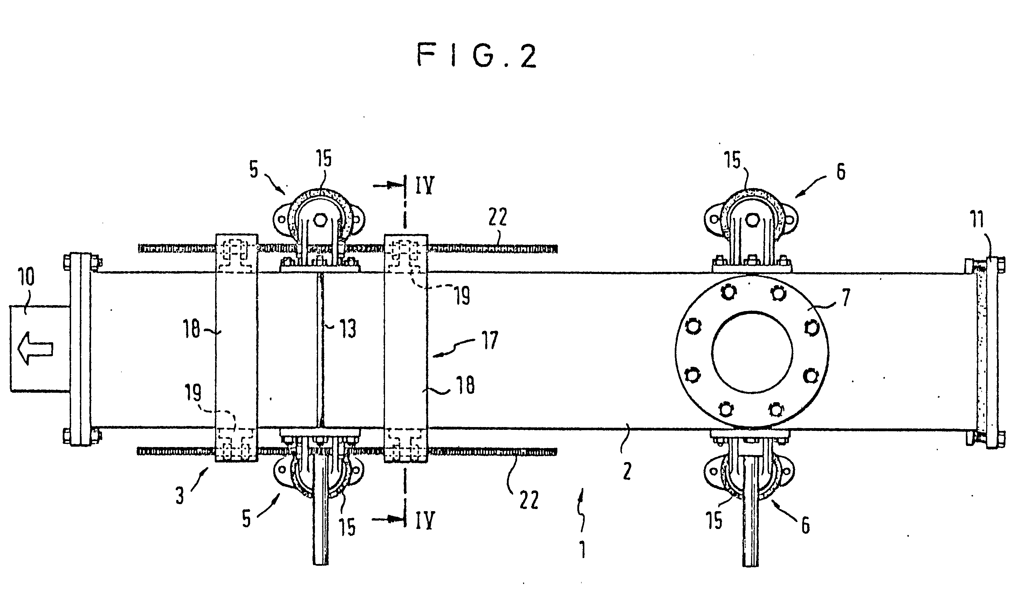

Wie aus den Fig. 1, 2 und 3 hervorgeht, besteht der erfindungsgemäße Grundträger 1 aus einem langgestreckten rohrartigen Grundkörper 2, an dessen Außenseite Befestigungseinrichtungen 3 für einen Antriebsmotor 4 sowie zwei Fußanordnungen 5 and 6 zur Abstützung des Grundkörpers gegenüber einem Fundament vorgesehen sind.

Auf der Oberseite des Grundkörpers 2 ist ferner ein Flansch 7 befestigt, der über in den Zeichnungen nicht dargestellte Höhenausgleichsstücke und/oder Nennweitenadapter einen Kompressor 8 trägt.

Um darzustellen, welche unterschiedlichen Kompressor-Antriebsmotor-Kombinationen von einem Grundträger der erfindungsgemäßen Art aufgenommen werden können, sind mit strichpunktierten Linien jeweils ein weiterer Antriebsmotor 4' sowie ein weitere Kompressor 8' größerer Ausführung in Fig. 1 angedeutet.

Im vorliegenden Ausführungsbeispiel wird die zu komprimierende Luft vom Kompressor 8 bzw. 8' über einen Filterschalldämpfer 9 angesaugt, im Bereich der in Fig. 1 rechten Fußanordnung 6 in den Grundkörper 2 eingespeist und im Bereich des dem Kompressor 8 entgegengesetzten Endes des Grundkörpers 2 über einen Druckrohranschlußflansch 10 zu einem Verbraucher geliefert.

Im vorliegenden Ausführungsbeispiel besteht der Grundkörper 2 aus einem rechteckigen handelsüblichen Vierkantrohr, dessen Breite etwa dem 1,5-fachen der Höhe entspricht. Dieses Vierkantrohr besitzt im Bereich seiner Stirnenden jeweils einen Flansch, wobei der in Fig. 1 im Bereich des Antriebsmotors 4 angeordnete Flansch den Druckronhranschlußflansch 10 und der im Bereich des Kompressors 8 angeordnete Flansch als Grundkörperstirnwandung eine Abschlußplatte 11 trägt.

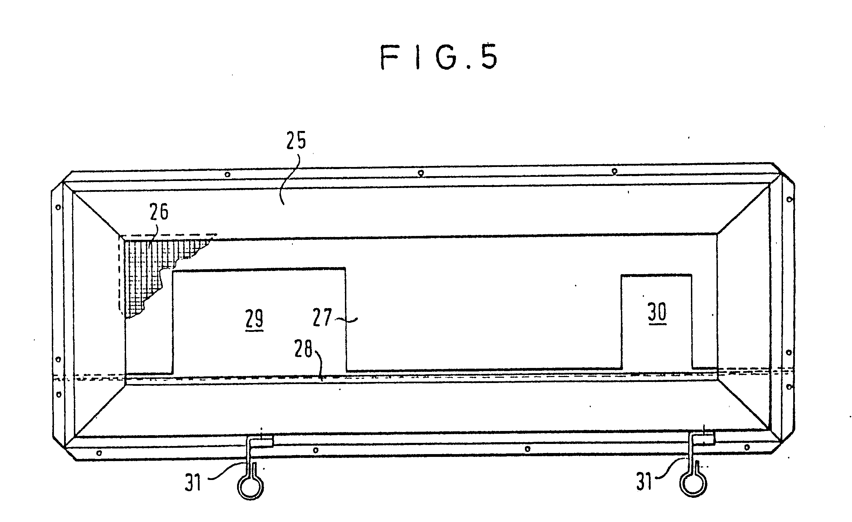

Wie aus den Fig. 1 bis 3 hervorgeht, bestehen die Fußanordnungen 5 und 6 jeweils aus zwei gleichen Wangen 12, die über eine Spanneinrichtung in Form von jeweils insgesamt drei Spannschrauben 13 am Grundkörper 2 festgeklemmt sind. Die Wangen 12 haben einen etwa T-förmigen Querschnitt (vgl. Fig. 3), wobei auf einer Hälfte des im vorliegenden Fall abgestuften Querbalkens 14 der Grundkörper 2 mit seiner Bodenwand aufliegt, während die andere Hälfte des Querbalkens 14 auf ihrer Unterseite Schwingmetallfüße 15 trägt. Der senkrecht nach oben verlaufende Steg 16 jeder Wange liegt über eine schwingungsdämpfende bzw. den Reibwert erhöhende Zwischenlage aus elastischem Material an den Seitenwänden des Grundkörpers 2 an.

In dem dargestellten Ausführungsbeispiel befinden sich die Fußanordnungen 5 und 6 jeweils genau unter dem Schwerpunkt des Antriebsmotors 4 bzw. des Kompressors 8.

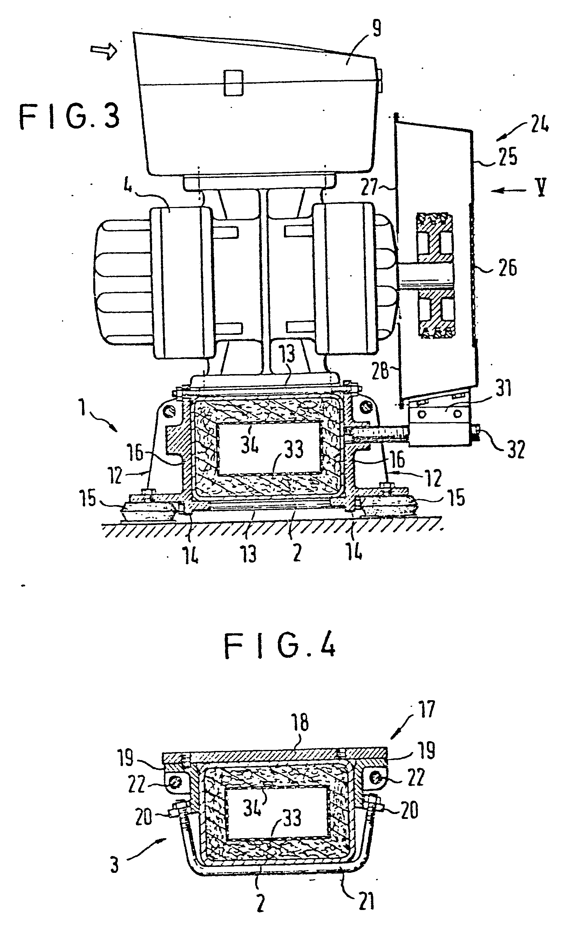

Die Befestigungseinrichtung 3 für den Antriebsmotor 4 wiederum besteht aus einer zweiteiligen Konsole 17, deren Stege 18 auf der Oberseite des Grundkörpers 2 aufruhen und über Schenkle 19 in Form von an dem Steg angeschweißten Gesenkschmiedestücken (vgl. Fig. 4) an den Seiten des Grundkörpers 2 geführt sind. Die Schenkel 19 wiederum weisen Flansche 20 auf, durch die die Enden eines Bügels 21 hindurchragen. Mittels einer auf diese Weise ausgestalteten Spanneinrichtung kann die Konsole am Grundkörper 2 festgespannt werden, ohne daß dazu Bohr-, Schweiß-oder andere Arbeiten notwendig sind.

Die beiden Teile der Konsole 17 sind — wie aus Fig. 1 hervorgeht — mittels einer Gewindestange 22 abstandsverstellbar miteinander verbunden, so daß die Konsole ohne großen Aufwand in Grundkörperlängsrichtung jeder Motorfußabmessung angepaßt werden kann. Zur Anpassung in Querrichtung kann im Bedarfsfalle eine quer zur Längserstreckung des Grundkörpers verlaufende Führungsschiene auf der Konsole angeordnet werden (nicht dargestellt).

Die Gewindestange 22 stützt sich — wie aus Fig. 1 zu ersehen ist — an den Wangen 12 der Fußanordnung 5 ab. Damit kann auf einfache Weise die Spannung des den Antriebsmotor 4 mit dem Kompressor 8 verbindenden Riemens 23 eingestellt werden.

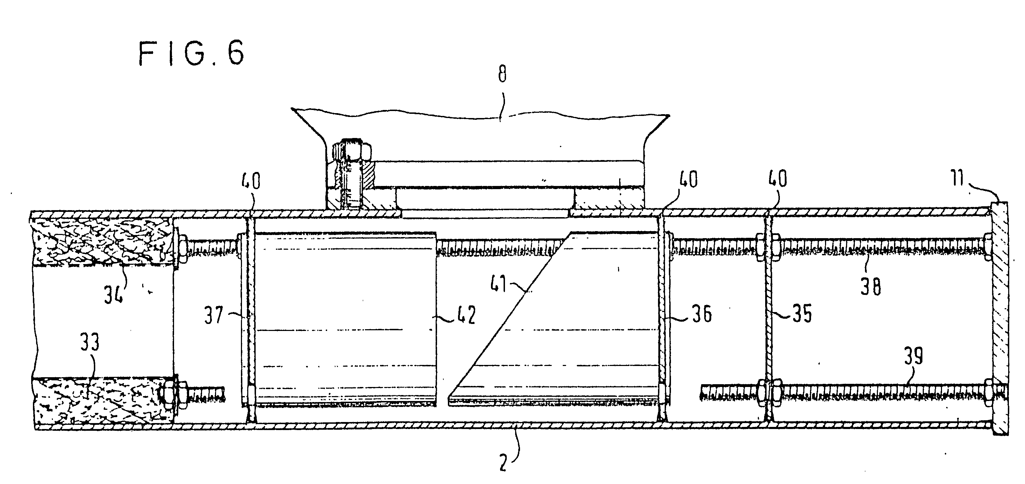

Wie aus Fig. 3 hervorgeht, sind die Riemenscheiben des Antriebsmotors 4 und des Kompressors 8 mittels eines Riemenschutzes 24 abgedeckt. Dieser Riemenschutz besteht — wie der Fig. 5 zu entnehmen ist — aus einem wannenartigen Vorderteil 25 mit perforierter Frontplatte 26 sowie einer geraden Rückwand, die aus einem Oberteil 27 und einem Unterteil 28 besteht. Das Oberteil 27 besitzt langgestreckte Aussparungen 29 und 30, die derart bemessen sind, daß sie einen ungehinderten Durchtritt der Riemenscheibenwellen sowohl des Kompressors als auch des Antriebsmotors für jede denkbare Kompressor-Antriebsmotor-Kombination sicherstellen. Im Bereich seiner Unterseite besitzt das wannenartige Vorderteil 25 des Riemenschutzes 24 Anschlußteile 31 in Form von Schellen, die auf an den Fußanordnungen 5 und 6 befestigten horizontalen Spindeln oder Stangen 32 zur Anpassung an die jeweilige Kompressor-Antriebsmotor-Kombination quer zur Grundkörperlägsachse verschiebbar befestigbar sind.

Um für die Lagerung des relativ sperrigen Riemenschutzes 24 möglichst wenig Platz benötigen, ist das Vorderteil 25 des Riemenschutzes 24 wannenartig ausgestaltet, so daß die Vorderteile ineinandergestapelt gelagert werden können.

Im vorliegenden Ausführungsbeispiel ist im Innenraum des Grundkörpers 2 eine Schalldämpfeinrichtung angeordnet, die aus einem von einem Absorptionsmaterialmantel 33 umhüllten perforierten Kanal 34 besteht und im Bereich ihres unter dem Kompressor angeordneten und über diesen hinaus verlängerten Endes Resonatorkammern umfaßt (Fig. 6).

Im dem über den Kompressor hinaus verlängerten Ende des Grundkörpers 2 sind im Abstand zueinander hintereinander drei Querwände 35, 36 und 37 angeordnet, die jeweils über Gewindestangen 38 und 39 in einem bestimmten Abstand zueinander gehalten sind. Um Scheppergeräusche beim Betrieb zu vermeiden, sind die Querwände 35, 36 und 37 im Bereich ihrer Ränder mit Dichteinrichtungen 40 in Form von Profilschnüren versehen. Die Gewindestangen 38 und 39 sind mit ihrem einen Ende an dem mit dem Absorptionsmaterialmantel 33 umhüllten perforierten Kanal 34 und mit ihrem anderen Ende an der Abschlußplatte 11 befestigt.

Die Querwände 36 und 37 besitzen jeweils einen zentralen kreisrunden Durchbruch, in dem jeweils ein Rohrstutzen 41 bzw. 42 in Grundkörperlängsrichtung ausgerichtet eingeschweißt ist. Während der benachbart zum perforierten Kanal 34 angeordnete Rohrstutzen 42 einen Zylinderabschnitt darstellt, ist der der geschlossenen Querwand 35 benachbart angeordnete Rohrstutzen 41 im Bereich seines dem Rohrstutzen 42 zugewandten Endes schräg abgeschnitten.

Sowohl die Lage der geschlossenen Querwand 35 als auch die Lage der mit dem Rohrstutzen 41 und 42 versehenen Querwände 36 und 37 kann durch die Gewindestangen 38 und 39 den jeweiligen akustischen Bedingungen entsprechend verändert und somit eine optimale Abstimmung dieser Schalldämpfeinrichtung erreicht werden. Gegebenenfalls kann die Schalldämpfung noch durch Umhüllung der durch die Rohrstutzen 41 und 42 gebildeten Abzweigresonatoren mittels Dämmaterial verbessert werden.

Im dargestellten Ausführungsbeispiel sind die Gewindestangen 38 und 39 an der Abschlußplatte 11 befestigt. Es sind jedoch auch Ausführungsformen denkbar, bei denen die Gewindestangen für eine Abstimmung während des Betriebes über Handräder oder dergleichen von außen betätigbar sind.

Ein Vorteil der in Fig. 6, dargestellten Anordnung ist ferner, daß alle Teile der Schalldämpfeinrichtung nach Art einer Kartusche in einem Stück aus dem Innenraum des Grundkörpers 2 heraus bzw. in diesen eingeschoben werden können. Dadurch wird die Montage sowie die Reinigung bzw. das Auswechseln der Schalldämpfeinrichtung erheblich vereinfacht.

Im vorliegenden Ausführungsbeispiel fließt die vom Kompressor 8 komprimierte Luft in den Grundkörper 2 hinein und durch diesen hindurch zum Druckrohranschlußflansch 10.

**Patentansprüche**

1. Grundträger (1) für einen Kompressor (8) mit Antriebsmotor (4), bestehend aus einem langgestreckten rohrartigen Grundkörper (2), an dessen Außenseite Befestigungseinrichtungen (3) für den Antriebsmotor (4) und in dessen Innenraum Schalldämpfeinrichtungen (33—42), angeordnet sind, die einen oder mehrere von einem Absorptionsmaterialmantel (33) umhüllten perforierten Kanal (34) sowie eine oder mehrere Resonatorkammern umfassen, wobei sich der Kanal (34) im wesentlichen in der Längsrichtung des Grundkörpers (2) erstreckt und mit seinem Eingang (7) mit der Druckseite des Kompressors (8) und mit seinem Ausgang mit einem Druckrohranschluß (10) in Verbindung steht, und der Grundkörper (2) über mindestens zwei Fußanordnungen (5,6) abgestützt ist, dadurch gekennzeichnet, daß mindestens eine Fußanordnung (5, 6), die Befestigungseinrichtung (3) für den Antriebsmotor (4) und mindestens Teile der Schalldämpfeinrichtungen (35, 36, 41, 37, 42) mittels einer Spanneinrichtung (13, 21, 22, 38, 39) an bzw. in dem Grundkörper (2) innerhalb eines bestimmten. Bereiches verschiebbar und an jeder Stelle festlegbar sind.

2. Grundträger nach Anspruch 1, dadurch gekennzeichnet, daß die Fußanordnung (5, 6) mittels der Spanneinrichtung (13) am Grundkörper (2) festklemmbar ist.

3. Grundträger nach Anspruch 1, dadurch gekennzeichnet, daß die Spanneinrichtung (13), für jede Fußanordnung (5, 6) den Grundkörper (2) über seinen gesamten Umfang klammerartig umfaßt.

4. Grundträger nach Anspruch 1, dadurch gekennzeichnet, daß die Befestigungseinrichtung (3) für den Antriebsmotor (4) mittels der Spanneinrichtung (21, 22) am Grundkörper (2) festlemmbar ist.

5. Grundträger nach Anspruch 1, dadurch gekennzeichnet, daß die Spanneinrichtung (21) für die Befestigungseinrichtung (3) für den Antriebsmotor (4) den Grundkörper (2) über seinen gesamten Umfang klammerartig umfaßt.

6. Grundträger nach Anspruch 1, dadurch gekennzeichnet, daß die Teile der Schalldämpfeinrichtung (35, 36, 41, 37, 42) mittels der Spanneinrichtung (38, 39) am Grundkörper (2) feststell bar sind.

7. Grundträger nach Anspruch 1 oder 6, dadurch gekennzeichnet, daß die Teile der Schalldämpfeinrichtung eine oder mehrere geschlossene oder mit Durchbrüchen versehene verschiebbare Querwände (35, 36, 37) und/oder Längswände umfassen.

8. Grundträger nach Anspruch 1, 2 oder 3, dadurch gekennzeichnet, daß jedge Fußanordnung (5, 6) aus zwei gleichen Wangen (12) besteht, die jeweils auf gegenüberliegenden Seiten des Grundkörpers (2) angeordnet und über Spannschellen, Spannschrauben (13) oder Spannbügel am Grundkörper (2) festgeklemmt sind.

9. Grundträger nach Anspruch 8, dadurch gekennzeichnet, daß zwischen den Wangen (12) und dem Grundkörper (2) eine Zwischenlage angeordnet ist.

10. Grundträger nach Anspruch 9, dadurch gekennzeichnet, daß die Zwischenlage zur Schwingungsdämpfung aus einem elastischen Material besteht.

11. Grundträger nach Anspruch 9, dadurch gekennzeichnet, daß die Zwischenlage zur Erhöhung des Reibwertes eine rauhe oder klebende Oberfläche aufweist.

12. Grundträger nach einem oder mehreren der Ansprüche 8 bis 11, dadurch gekennzeichnet, daß sich die Wangen (12) über Schwingmetallfüße (15) auf dem Fundament abstützen.

13. Grundträger nach Anspruch 12 für einen Grundkörper (2) mit rechteckigem Querschnitt, dadurch gekennzeichnet, daß die Wangen (12) im Querschnitt etwa T-förmig ausgebildet sind, wobei auf einer Hälfte des Querbalkens (14) der Grundkörper (2) mit seiner Bodenwand aufliegt, die andere Hälfte des Querbalkens (14) auf ihrer Unterseite den Schwingmetallfuß (15) trägt und der senkrecht nach oben verlaufende Steg (16) des T-förmigen Querschnitts an der Seitenwand des Grundkörpers (2) anliegt.

14. Grundträger nach Anspruch 13, dadurch gekennzeichnet, daß die Wangen (12) mit mindestens zwei Spannschrauben (13) miteinander verbunden sind, die oberhalb und unterhalb des Grundkörpers etwa parallel zur benachbarten Wand verlaufen und sich durch Bohrungen in den Wangen hindurcherstrecken.

15. Grundträger nach Anspruch 14, dadurch gekennzeichnet, daß unterhalb des Grundkörpers (2) zwei und oberhalb des Grundkörpers eine Spannschraube (13) verlaufen.

16. Grundkörper nach Anspruch 4 oder 5, dadurch gekennzeichnet, daß die Befestigungseinrichtung (3) aus einer mit einem Steg (18) auf der Oberseite des Grundkörpers (2) aufruhenden und durch Schenkel (19) seitlich am Grundkörper geführten Konsole (17) besteht.

17. Grundträger nach Anspruch 16, dadurch gekennzeichnet, daß die Konsole (17) U-förmig ausgebildet ist.

18. Grundträger nach Anspruch 16 oder 17, dadurch gekennzeichnet, daß der Steg (18) der Konsole (17) aus einem handelsüblichen Flachstahl besteht und die Schenkel (19) an dem Flachstahl angeschweißte Gesenkschmiedestücke sind.

19. Grundträger nach Anspruch 16 oder 17, dadurch gekennzeichnet, daß der Steg (18) der Konsole (17) quer zur Längserstreckung des Grundkörpers verlaufende Führungsschienen trägt.

20. Grundträger nach einem oder mehreren der Ausprüche 16 bis 19, dadurch gekennzeichnet, daß die Konsole (17) als Spanneinrichtung mindestens einen den Grundkörper unterfangenden Bügel (21) aufweist.

21. Grundträger nach Anspruch 16, dadurch gekennzeichnet, daß die Konsole (17) aus zwei Teilen besteht, die über mindestens eine Gewindestange (22) abstandsverstellbar miteinander verbunden sind.

22. Grundträger nach Anspruch 16, dadurch gekennzeichnet, daß sich die Konsole (17) über mindestens eine Gewindestange (22) an dem Grundträger (2), an mit diesem verbundenen Teilen, oder an den Fußanordnungen (5) abstandsverstellbar abstützt.

23. Grundträger nach einem oder mehreren der Ansprüche 16 bis 22, dadurch gekennzeichnet, daß die Konsole (17) höhenverstellbare Anschlußstücke trägt.

24. Grundträger nach Anspruch 8, 21 und 22, dadurch gekennzeichnet, daß zwischen den beiden Teilen der Konsole (17) die Fußanordnung (5) vorgesehen ist.

25. Grundträger nach einem oder mehreren der vorangegangenen Ansprüche, dadurch gekennzeichnet, daß die Fußanordnung (5, 6) und die Befestigungseinrichtung (3) einstückig ausgebildet sind.

26. Grundträger nach Anspruch 7, dadurch gekennzeichnet, daß die Durchbrüche mit einem oder mehreren Rohrstutzen (41, 42) versehen sind.

27. Grundträger nach Anspruch 26, dadurch gekennzeichnet, daß die Rohrstutzen (41, 42) vorzugsweise in Längsrichtung des Grundkörpers (2) verlaufen.

28. Grundträger nach Anspruch 26 oder 27, dadurch gekennzeichnet, daß die Stirnflächen der Rohrstutzen (41, 42) in einem rechten oder anderen Winkel zur Stutzenachse verlaufen.

29. Grundträger nach Anspruch 7, dadurch gekennzeichnet, daß die Querwände (35, 36, 37) an einer oder mehreren, vorzugsweise in Lägsrichtung des Grundkörpers verlaufenden Spindeln (38, 39) oder Stangen befestigt sind.

30. Grundträger nach Anspruch 29, dadurch gekennzeichnet, daß die Spindeln oder Stangen von außen betätigbar sind.

31. Grundträger nach Anspruch 7, dadurch gekennzeichnet, daß zwischen den Querwänden (35, 36, 37) und der Innenfläche des Grundkörpers (2) Dichteinrichtungen (40) vorgesehen sind.

32. Grundträger nach Anspruch 31, dadurch gekennzeichnet, daß die Dichteinrichtungen (40) elastische Profilschnüre sind.

33. Grundträger nach einem oder mehreren der Ansprüche 26 bis 32, dadurch gekennzeichnet, daß der Grundkörper (2) auf der dem Druckrohranschluß (10) gegenüberliegenden Seite über den Kompressor (8) hinaus verlängert ist und in diesem verlängerten Bereich mindestens eine Resonatorkammer besitzt, die hintereinander die drei verschiebbaren und im Abstand zueinander angeordneten Querwände (35, 36, 37) aufweist, wobei die der Grundkörperstirnwandung (11) benachbarte Querwand (35) geschlossen ist und die übrigen Querwände (36, 37) mit je einem zentralen Durchbruch zur Aufnahme je eines Rohrstutzens (41, 42) ausgestattet sind und die einander zugewandten Stirnenden der Rohrstutzen etwa im Bereich der Einlaßöffnung (7) des Grundkörpers (2) liegen, und die zur Verschiebung und Festlegung der Querwände vorgesehenen Spindeln (38, 39) oder Stangen mit ihren der Grundkörperstirnwandung (11) entgegengesetzen Enden an dem Absorptionsschalldämpfer (33, 34) angeschlossen sind.

34. Grundträger nach Anspruch 33, dadurch gekennzeichnet, daß mindestens ein im Bereich der Einlaßöffnung des Grundkörpers liegendes Rohrstutzenende (41) schräg abgeschnitten ist.

35. Grundträger nach Anspruch 29 oder 30, dadurch gekennzeichnet, daß die Spindeln (38, 39) oder Stangen neben den verschiebbaren Querwänden (35, 36, 37) feststehende Teile (33, 34) der Schalldämpfeinrichtung tragen.

36. Grundträger nach einem oder mehreren der vorhergehenden Ansprüche, dadurch gekennzeichnet, daß der Kompressor (8) über ein oder mehrere Höhenausgleichsstücke und/oder Nennweitenadapter an dem Grundkörper (2) angeschlossen ist.

37. Grundträger nach einem oder mehreren der vorhergehenden Ansprüche mit einem Riemenschutz (24), dadurch gekennzeichnet, daß der Riemenschutz (24) im Bereich seiner Unterseite Anschlußteile (31) aufweist, die jeweils von einer an der Fußanordnung (5,6) befestigten Spindel oder Stange (32) quer zur Grundkörperlängsachse verschiebbar und festlegbar sind.

38. Grundträger nach Anspruch 37, dadurch gekennzeichnet, daß die Anschlußteile (31) an dem Riemenschutz (24) in Grundkörperlängsrichtung verschiebbar befestigt sind.

39. Grundträger nach Anspruch 37, dadurch gekennzeichnet, daß die dem Kompressor (8) und dem Antriebsmotor (4) zugewandte Wand (27) des Riemenschutzes langgestreckte Aussparungen (29, 30) für die Riemenscheibenwellen aufweist.

### Revendications

1. Chassis-support (1) pour un compresseur (8) avec un moteur d'entrainement (4) comprenant un élément support (2) tubulaire allongé avec, disposés à sa surface extérieure des dispositifs de fixation (3) pour le moteur d'entrainement (4) et, dans son volume intérieur, des dispositifs silencieux (34, 42) qui comprennent un ou plusieurs canaux perforés (34) enveloppés par une gaine (33) de matière absorbante, ainsi qu'une ou plusieurs chambres de résonance, le canal (34) s'étendant essentiellement dans la direction longitudinale de l'élément support (2) et étant en liaison par son entrée (7) avec le coté de refoulement du compresseur (8) et par sa sortie avec un raccord (10) de tuyau sous pression, et l'élément support (2) étant supporté par au moins deux pieds (5, 6), caractérisé en ce qu'au moins un pied (5, 6), le dispositif de fixation (3) pour le moteur d'entraînement (4) et au moins des parties des dispositifs silencieux (35, 36, 41; 37, 42) peuvent être déplacés à l'intérieur d'une région prédéterminée et fixés en disposition au moyen d'un dispositif de serrage (13, 21, 22, 38, 39) sur ou dans l'élément support (2).

2. Chassis-support selon la revendication 1, caractérisé en ce que les pieds (5, 6) sont bridés sur l'élément support (2) par le dispositif de serrage (13).

3. Chassis-support selon la revendication 1, caractérisé en ce que le dispositif de serrage (13) de chaque pied (5, 6) entoure l'élément support (2) à la manière d'une bride sur toute sa périphérie.

4. Chassis-support selon la revendication 1, caractérisé en ce que le dispositif de fixation (3) pour le moteur d'entraînement (4) est bridé sur l'élément support (2) au moven du dispositif de serrage (21, 22).

5. Chassis-support selon la revendication 1, caractérisé en ce que le dispositif de serrage (21) pour le dispositif de fixation (3) du moteur d'entraînement (4) entoure l'élément support (2) à la manière d'une bride sur toute sa périphérie.

6. Chassis-support selon la revendication 1, caractérisé en ce que les parties du dispositif silencieux (35, 36, 41; 37, 42) peuvent être fixées à l'élément support (2) au moyen du dispositif de serrage (38, 39).

7. Chassis-support selon la revendication 1 ou 6, caractérisé en ce que le dispositif silencieux comprend une ou plusieurs parois transversales (35, 36, 37) et/ou parois longitudinales qui peuvent être déplacées, fermées ou prévues avec des ouvertures.

8. Chassis-support selon la revendication 1, 2 ou 3, caractérisé en ce que chaque pied (5, 6) consiste en deux joues identiques (12) disposées chacune sur les côtés opposés de l'élément support (2) et bridgées sur l'élément support (2) par des brides de serrage, des vis de serrage (13) ou des étriers de serrage.

9. Chassis-support selon la revendication 8, caractérisé en ce qu'une couche intermédiaire est disposée entre les joues (12) et l'élément support (2).

10. Chassis-support selon la revendication 9, caractérisé en ce que la couche intermédiaire consiste en une matière élastique pour l'amortissement de vibrations.

11. Chassis-support selon la revendication 9, caractérisé en ce que la couche intermédiaire comporte une surface rugueuse ou collante pour augmenter le coefficient de frottement.

12. Chassis-support selon une ou plusieurs des revendications 8 à 11, caractérisé en ce que les joues (12) sont supportées par les fondations par des pieds d'articulation élastique (15).

13. Chassis-support selon la revendication 12, pour un élément support (2) avec une section transversale rectangulaire, caractérisé en ce que les joues (12) sont réalisées avec une section transversale à peu près en forme de T, l'élément support (2) s'appuyant par sa paroi inférieure sur une moitié de la traverse (14), l'autre moitié de la traverse (14) portant le pied d'articulation élastique (15) à sa face inférieure, et la branche verticale (16) dirigée vers le haut de la section en forme de T s'appuyant contre la paroi latérale de l'élément support (2).

14. Chassis-support selon la revendication 13, charactérisé en ce que les joues (12) sont reliées entre elles par au moins deux vis de serrage (13), qui sont disposées à peu près parallèlment à la paroi voisine, au-dessous et au-dessous de l'élément support, et qui passent dans des trous dans les joues.

15. Chassis-support selon la revendication 14, caractérisé en ce que deux vis de serrage (13) sont disposées au-dessous de l'élément support (2), et une vis de serrage (13) au-dessous de l'élément support.

16. Chassis-support selon la revendication 4 ou 5, caractérisé en ce que le dispositif de fixation (3) consiste en une console (17) qui repose par une traverse (18) sur la face supérieure de l'élément support (2) et qui est guidée latéralement par des ailes (19) sur l'élément support.

17. Elément support selon la revendication 16, caractérisé en ce que la console (17) est realisée en forme de U.

18. Chassis-support selon la revendication 16 ou 17, caractérisé en ce que la traverse (18) de la console (17) est faite d'un fer plat courant dans le commerce, les ailes (19) étant des pièces matricées, soudées sur le fer plat.

19. Chassis-support selon la revendication 16 ou 17, caractérisé en ce que la traverse (18) de la console (17) porte des rails de guidage disposés perpendiculairement à la direction longitudinale de l'élément support.

20. Chassis-support selon l'une ou plusieurs des revendications 16 à 19, caractérisé en ce que la console (17) comporte, comme dispositif de serrage, au moins un étrier (21) entourant l'élément support.

21. Chassis support selon la revendication 16, caractérisé en ce que la console (17) est faite en deux parties, qui sont reliées entre elles à une distance réglable par au moins une tige filetée (22).

22. Chassis-support selon la revendication 16, caractérisé en ce que la console (17) est supportée avec un écartement réglable, au moyen d'au moins une tige filetée (22) par l'élément support (2), par une pièce fixée sur ce dernier ou par un pied (5).

23. Chassis-support selon une ou plusieurs des revendications 16 à 22, caractérisé en ce que la console (17) porte des pièces de raccordement réglables en hauteur.

24. Chassis-support selon la revendication 8, 21 et 22, caractérisé en ce que le pied (5) est prévu entre les deux parties de la console (17).

25. Chassis-support selon l'une ou plusieurs des revendications précédentes, caractérisé en ce que le pied (5, 6) et le dispositif de fixation (3) sont réalisés en une seule pièce.

26. Chassis-support selon la revendication 7, caractérisé en ce que les ouvertures sont prévues avec une ou plusieurs tubulures (41, 42).

27. Chassis-support selon la revendication 26, caractérisé en ce que les tubulures (341, 42) sont dirigées de préférence dans la direction longitudinale de l'élément support (2).

28. Chassis-support selon la revendication 26 ou 27, caractérisé en ce que la surface avant de la tubulure (41, 42) fait un angle droit ou un autre angle par rapport à son axe.

29. Chassis-support selon la revendication 7, caractérisé en ce que les parois transversales (35, 36, 37) sont fixées à une ou plusieurs broches (38, 39) ou tiges dirigées de préférence dans la direction longitudinale de l'élément support.

30. Chassis-support selon la revendication 9, caractérisé en ce que les broches ou tiges peuvent être actionnées par l'extérieur.

31. Chassis-support selon la revendication 7, caractérisé en ce que des dispositifs d'étanchéité (40) sont prévues entre les parois transversales (35, 36, 37) et la surface intérieure de l'élément support (2).

32. Chassis-support selon la revendication 31, caractérisé en ce que les dispositifs d'etanchéité (40) sont des cordons profilés élastiques.

33. Chassis-support selon une ou plusieurs des revendications 26 à 32, caractérisé en ce que l'élément support (2) se prolonge au-delà du compresseur (8) sur son côté opposé au raccord (10) de tuyau sous pression et comporte dans cette région prolongée au moins une chambre de résonance et comporte trois parois transversales (35, 36, 37) les unes derrières les autres, pouvant être déplacées et disposées à distance les unes des autres, la paroi transversale (35) voisine de la paroi d'extrémité (11) de l'élément support étant fermée et les autres parois transversales (36, 37) étant réalisées avec chacune une ouverture centrale pour recevoir une tubulure (41, 42), les extrémités se faisant face des tubulures se trouvant à peu prés dans la région de l'ouverture d'entrée (7) de l'élément support (2), et les broches (38, 39) ou tiges prévues pour déplacer et fixer les parois transversales étant reliées au silencieux à absorption (33, 34) par leurs extrémités opposées à la paroi d'extrémité (11) de l'élément support.

34. Chassis-support selon la revendication 33, caractérisé en ce qu'au moins une extrémité de tubulure (41) se trouvant dans la région de l'ouverture d'entrée de l'élément support est coupée obliquement.

35. Chassis-support selon la revendication 29 ou 30, caractérisé en ce que les broches (38, 39) ou tiges supportent les parties fixes (33, 34) du dispositif silencieux, en plus des parois transversales mobiles (35, 36, 37).

36. Chassis-support selon une ou plusieurs des revendications précédentes, caractérisé en ce que le compresseur est monté sur l'élément support (2) au moyen d'une ou plusieurs pièces de compensation de hauteur et/ou un adaptateur de portée nominale.

37. Chassis-support selon l'une ou plusieurs des revendications précédentes, avec un capot de protection decourroie (24), caractérisé en ce que le capot de protection de courroie (24) comporte, dans la région de sa face inférieure, des pièces de raccordement (31) qui peuvent être déplacées perpendiculairement à l'axe longitudinal de l'élément support et qui peuvent être fixées par une tige ou broche (32) fixée sur un pied (5, 6).

38. Chassis-support selon la revendication 37, caractérisé en ce que les pièces de raccordement (31) sont fixées sur le capot de protection de courroie (24) de manière à pouvoir être déplacées dans la direction longitudinale de l'élément support.

39. Chassis-support selon la revendication 37, caractérisé en ce que la paroi (27) du capot de protection de courroie faisant face au compresseur (8) et au moteur d'entraînement (4) comporte des logements (29, 30) allongés pour les arbres des poulies à courroie.

## Claims

1. A base support (1) for a compressor (8) having a drive motor (4), consisting of a longitudinally extending tubular base body (2), to whose outer sides securing devices (3) for the drive motor (4) are arranged and in whose inner space muffling devices (33—42) are arranged, which surround one or more of an absorption material sleeve (33) enclosed perforated channel (34) as well as one or more resonator chambers, wherein the channel (34) extends essentially in the longitudinal direction of the base body (2) and is connected by its inlet with the passage side of the compressor (8) and by its outlet with a pressure point connection (10), and the base body (2) is supported by at least two foot arrangements (5, 6) characterised in that at least one foot arrangement (5, 6), the fastening device (3) for the drive motor (4), and at least parts of the muffling devices (35, 36, 41; 37, 42) are movable and fastenable at each position by means of a gripping arrangement (13, 21, 22, 28, 39) on or in the base body (2) over a certain range.

2. A base support according to claim 1 characterised in that the foot arrangement (5, 6) is securable to the base body (2) by means of the gripping device (13).

3. A base support according to claim 1 characterised in that the gripping arrangement (13) for each foot arrangement (5, 6) grippingly surrounds the base body (2) over its entire periphery.

4. A base support according to claim 1 characterised in that the fastening device (3) for the drive motor (4) is securable by means of the gripping arrangement (21, 22) on the base body (2).

5. A base support according to claim 1 characterised in that the gripping arrangement (21) for the fastening device (3) for the drive motor (4) grippingly surrounds the base body (2) over its entire periphery.

6. A base support according to claim 1 characterised in that the parts of the muffling device (35; 36, 41; 37, 42) are securable by means of the gripping arrangement (38, 39) on the base body (2).

7. A base support according to claim 1 or 6 characterised in that the parts of the muffling arrangement surround one or more transverse walls (35, 36, 37) and/or longitudinal walls which are closed or movable and provided with perforations.

8. A base support according to claim 1, 2 or 3 characterised in that each foot arrangement (5, 6) consists of two similar side walls (12) which are in each case arranged on oppositely lying sides of the base body (2) and are secured on the base body (2) by means of clamps, clamping screws (13) or gripping devices.

9. A base support according to claim 8 characterised in that between the side walls (12) and the base body (2) is arranged an intermediate member.

10. A base support according to claim 9 characterised in that the intermediate member for oscillation damping consists of an elastic material.

11. A base support according to claim 9 characterised in that the intermediate member has, for increased friction, a rough or adhesive upper layer.

12. A base support according to one or more of claims 8 to 11 characterised in that the side walls (12) support on the base plate by means of swingable metal feet (15).

13. A base support according to claim 12 for a base body (2) with a rectangular cross-section characterised in that the side walls (12) are formed and have an approximate T-shaped in cross-section, wherein on a half of the crossbeam (14) the base body is supported by its base wall, the other half of the crossbeam (14) carries the swingable metal foot (15) on its underside, and is adjacent to the crosspiece (16), which extends at right angles upwardly, of the T-shaped cross-section on the side wall of the base body (2).

14. A base support according to claim 13 characterised in that the side pieces (12) are connected together by at least two gripping screws (13), which extend above and below the base body approximately parallel to the adjacent wall, and extend away through apertures in the side members.

15. A base support according to claim 14 characterised in that there extend beneath the base body (2) two gripping screws (13) and above the base body one gripping screw (13).

16. A base support according to claim 4 or 5 characterised in that the fastening device (3) consists of a bracket (17) which supports by a crosspiece (18) on the upper side of the base body (2) and which extends by means of limbs (19) laterally on the base body.

17. A base support according to claim 16 characterised in that the bracket (17) is formed in a U-shape.

18. A base support according to claim 16 or 17 characterised in that the crosspiece (18) of the bracket (17) consists of a flat bar of commercial size and the limbs (19) are drop forge pieces welded onto the flat bar.

19. A base support according to claim 16 or 17 characterised in that the crosspiece (18) of the bracket (17) carries guide rails extending crosswide of the longitudinal extension of the base body.

20. A base support according to one or more of claims 16 to 19 characterised in that the bracket (17) has as a gripping device at least one clamp gripping the base body from below.

21. A base support according to claim 16 characterised in that the bracket (17) consists of two parts, which are connected together at an adjustable distance by means of at least one threaded pin.

22. A base support according to claim 16 characterised in that the bracket (17) supports at an adjustable distance by means of at least one threaded pin (22) on the base support (2), on parts connected to this, or on the foot arrangement (5).

23. A base support according to one or more of claims 16 to 22 characterised in that the bracket (17) carries connection pieces of adjustable height.

24. A base support according to claim 8, 21 and 22 characterised in that between both parts of the bracket (17) is provided the foot arrangement (5).

25. A base support according to one or more of the preceding claims characterised in that the foot arrangement (5, 6) and the fastening device (3) are formed in one piece.

26. A base support according to claim 7 characterised in that the openings are provided with one or more pipe pieces (41, 42).

27. A base support according to claim 26 characterised in that the pipe pieces (41, 42) extend preferably in the longitudinal direction of the base body (2).

28. A base support according to claim 26 or 27 characterised in that the front surfaces of the pipe pieces (41, 42) extend at right angles or another angle to the pipe axis.

29. A base support according to claim 7 characterised in that the crosswalls (35, 36, 37) are secured on one or more spindles (38, 39) or bars, preferably extending in the longitudinal direction of the base body.

30. A base support according to claim 29 characterised in that the spindles or bars are externally operable.

31. A base support according to claim 7 characterised in that between the crosswalls (35, 36, 37) and the inner surface of the base body (2) are provided sealing devices (40).

32. A base support according to claim 31 characterised in that the sealing devices (40) are resilient, shaped cords.

33. A base support according to one or more of claims 26—32 characterised in that the base body (2) is extended over the compressor (8) on the sides lying opposite to the pressure pipe connection (10) and includes in this extended region at least one resonator chamber, which has behind one another the three adjustable crosswalls (35, 36, 37) which are mutually spaced, wherein the crosswall (35) adjacent to the front wall (11) of the base body is closed and the remaining crosswalls (36, 37) are each provided with a central aperture for the reception of a respective pipe piece (41, 42) and the opposed front ends of the pipe pieces lie approximately in the region of the inlet opening (17) of the base body (2), and the spindles (38, 39) or bars for the adjustment and securing of the crosswalls are connected to the absorption muffler (33, 34) with their ends which are opposite the front wall (11) of the base body.

34. A base support according to claim 33 characterised in that at least one pipe piece end (41), lying in the region of the inlet opening of the base body, is partially cut away.

35. A base support according to claim 29 or 30 characterised in that the spindles (38, 39) or bars carry, adjacent the adjustable crosswalls (35, 36, 37), securing parts (33, 34) for the muffling device.

36. A base support according to one or more of the preceding claims characterised in that the compressor (8) is secured to the base body (2) by one or more height leveling pieces and/or nominal distance adapters.

37. A base support according to one or more of the preceding claims having a pulley guard (24), characterised in that the pulley guard (24) has connection parts (31) in the region of its underside, which are in each case adjustably and fixedly on one spindle or bar (32) secured to the foot arrangement (5, 6) crosswise of the base body longitudinal axis.

38. A base support according to claim 37 characterised in that the connection parts (31) are secured adjustably on the pulley guard (24) in the longitudinal direction of the base body.

39. A base support according to claim 37 characterised in that the wall of the pulley guard, which faces away from the compressor (8) and the drive motor (4), has longitudinally extending apertures (29, 30) for the belt pulley axles.

F I G.1

# FIG.2

# F I G . 5

25

26

29 27

28

30

31 31

0014743

3

FIG. 3

FIG. 4

FIG.6